# EUROPÄISCHE PATENTSCHRIFT

(11) **EP 4 533 570 B1**
(45) Veröffentlichungstag und Bekanntmachung des Hinweises auf die Patenterteilung: **13.05.2026**
(21) Anmeldenummer: 23728722.2
(22) Anmeldetag: 23.05.2023
(51) Int. Cl.: H01M 8/04119, H01M 8/04828

(54) **ABGASNACHBEHANDLUNGSVORRICHTUNG FÜR EINE BRENNSTOFFZELLENANORDNUNG**
EXHAUST GAS TREATMENT DEVICE FOR FUEL CELL ASSEMBLY
DISPOSITIF DE TRAITEMENT DE GAZ RÉSIDUELS D'UNE INSTALLATION DE PILE À COMBUSTIBLE

(30) Priorität: 02.06.2022 DE 102022114021
(43) Veröffentlichungstag der Anmeldung: 09.04.2025
(73) Patentinhaber: MAN Truck & Bus SE, 80995 München (DE)
(72) Erfinder: WAGENBLAST, Max, 85221 Dachau (DE); SWOBODA, Jan, 80995 München (DE); PETERSEN, Niels, 80995 München (DE); POLLAK, Markus, 38106 Braunschweig (DE); KÖHLER, Jürgen, 38173 Sickte (DE)
(86) Internationale Anmeldenummer: PCT/EP2023/063761
(87) Internationale Veröffentlichungsnummer: WO 2023/232552

(56) Entgegenhaltungen:
- DE-A1- 102012 011 326
- DE-A1- 102020 124 754

## Beschreibung

Die Erfindung betrifft eine Abgasnachbehandlungsvorrichtung für eine Brennstoffzellenanordnung, eine Antriebsvorrichtung mit der Abgasnachbehandlungsvorrichtung, und ein Kraftfahrzeug, insbesondere ein Nutzfahrzeug, mit der Antriebsvorrichtung.

Brennstoffzellensysteme, die z. B. als Antriebssysteme für Kraftfahrzeuge dienen, nutzen üblicherweise Wasserstoff, das den Anoden der Brennstoffzellen zugeführt wird, und Sauerstoff aus der Umgebungsluft, das den Kathoden der Brennstoffzellen zugeführt wird, um zu Wasser(dampf) zu reagieren und dadurch elektrische Energie zu erzeugen. Der entstandene Wasserdampf (sogenanntes Produktwasser) wird dabei mit dem Abgas, d. h. mit dem nicht reagierten Wasserstoff und insbesondere mit der Umgebungsluft, das den nicht reagierten Sauerstoff umfasst, abgeführt.

Für die Funktionsfähigkeit solcher Brennstoffzellensysteme ist es wichtig, dass die Membrane zwischen einer Anodenseite und einer Kathodenseite der Brennstoffzellen eine gewisse Feuchtigkeit aufweisen. Um dies sicherzustellen, ist z. B. bekannt, die aus der Umgebung angesaugte Umgebungsluft bei der Zuführung mittels Befeuchter zu befeuchten und so die benötigte Feuchtigkeit in die Brennstoffzellen einzubringen. Bekannte Befeuchter sind z. B. so ausgestaltet, dass Wasserdampf aus dem Abgas an die angesaugte Umgebungsluft übertragen wird.

Dazu ist üblicherweise nicht der gesamte im Abgas enthaltene Wasserdampf notwendig, sodass der Rest an Wasserdampf ungenutzt mit dem Abgas an die Umgebung abgegeben wird. DE 10 2020 124754 offenbart eine Abgasnachbehandlungsvorrichtung für eine Brennstoffzellenanordnung mit einem Abgasentfeuchter und einem Abgasverflüssiger, wobei der Abgasentfeuchter und der Abgasverflüssiger fluidisch in Reihe geschaltet sind.

Daher ist es Aufgabe der Erfindung, eine derartige Lösung bereitzustellen, mit der die Nachteile der bisherigen Lösungen zumindest teilweise vermieden werden. Insbesondere ist es eine Aufgabe der Erfindung, eine möglichst effiziente Technik bereitzustellen, mit der dem Abgas von Brennstoffzellen ein möglichst hohes Maß an in den Brennstoffzellen erzeugtem Wasser(dampf) zur weiteren Nutzung entzogen werden kann.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird eine Abgasnachbehandlungsvorrichtung für eine Brennstoffzellenanordnung bereitgestellt. Die Abgasnachbehandlungsvorrichtung umfasst einen Einlass, einen Auslass, einen Abgasentfeuchter und einen Abgasverflüssiger.

Der Einlass ist zur Aufnahme eines aus der Brennstoffzellenanordnung abgeführten Abgases, insbesondere von mit Wasserdampf und/oder Wasser angereicherter Luft, mit der Brennstoffzellenanordnung fluidisch verbindbar. Der Wasserdampf und/oder das Wasser ist insbesondere ein im Betrieb der Brennstoffzellenanordnung erzeugtes Wasser (und/oder Produktwasser). Der Auslass ist zum Auslassen des Abgases nach einem Durchströmen der Abgasnachbehandlungsvorrichtung ausgebildet.

Der Abgasentfeuchter ist zum Entziehen von Wasser und/oder Wasserdampf aus dem Abgas ausgebildet. Der Abgasentfeuchter kann ausgebildet sein, eine vorbestimmte Menge, insbesondere einen vorbestimmten Stoffmengenstrom, an Wasser und/oder Wasserdampf aus dem Abgas zu entziehen. Die vorbestimmte Menge kann z. B. von zumindest einer Betriebsbedingung, einem Betriebspunkt und/oder zumindest einer Umgebungsbedingung der Brennstoffzellenanordnung und/oder der Abgasnachbehandlungsvorrichtung abhängen. Das Entziehen von Wasser und/oder Wasserdampf erfolgt insbesondere ohne eine Kondensation des Wasserdampfs.

Der Abgasentfeuchter kann insbesondere als Teil einer Befeuchtereinrichtung und/oder eines Feuchtigkeitsübertragers ausgeführt sein. Die Befeuchtereinrichtung und/oder der Feuchtigkeitsübertrager können einen Befeuchter aufweisen und/oder ausgebildet sein, den aus dem Abgas entzogenen Wasserdampf und/oder das aus dem Abgas entzogene Wasser vom Abgasentfeuchter in den Befeuchter zu übertragen.

Der Abgasverflüssiger ist zum Verflüssigen von Wasserdampf und/oder Abscheiden von (verflüssigtem) Wasser aus dem Abgas ausgebildet. Der Abgasverflüssiger kann z. B. zumindest eine Wasserkondensationseinrichtung und einen Wasserabscheider, der vorzugsweise der Wasserkondensationseinrichtung fluidisch nachgeschaltet ist, aufweisen. Das Verflüssigen von Wasserdampf erfolgt insbesondere mittels einer Kondensation des Wasserdampfs.

Die Wasserkondensationseinrichtung kann z. B. ein Gas-Gas-Wärmeübertrager, insbesondere ein Luft-Luft-Wärmeübertrager, sein. Das verflüssigte und/oder abgeschiedene Wasser kann z. B. zur (weiteren) Nutzung sammelbar oder zumindest einer anderen Vorrichtung zuführbar sein. Das verflüssigte und/oder abgeschiedene Wasser kann z. B. als Verdunstungskühlwasser weiternutzbar sein.

Der Abgasentfeuchter und der Abgasverflüssiger sind fluidisch in Reihe geschaltet.

Die Abgasnachbehandlungsvorrichtung umfasst ferner eine fluidische Umschalteinrichtung zur Umschaltung zwischen zumindest zwei Schaltkonfigurationen des Abgasentfeuchters und des Abgasverflüssigers.

Die Schaltkonfigurationen umfassen eine erste Schaltkonfiguration, in der der Abgasverflüssiger fluidisch vor den Abgasentfeuchter geschaltet ist. Die Schaltkonfigurationen umfassen ferner eine zweite Schaltkonfiguration, in der der Abgasverflüssiger fluidisch hinter den Abgasentfeuchter geschaltet ist.

Mit anderen Worten, die Abgasnachbehandlungsvorrichtung ist derart ausgebildet, dass das Abgas in der ersten Schaltkonfiguration zunächst den Abgasverflüssiger und dann den Abgasentfeuchter durchströmt, und in der zweiten Schaltkonfiguration zunächst den Abgasentfeuchter und dann den Abgasverflüssiger durchströmt.

Durch die vorliegende Offenbarung wird somit eine schaltbare Topologie bereitgestellt, mit der die Reihenfolge, auf welche Weise Wasser(dampf) aus dem Abgas der Brennstoffzellenanordnung entzogen wird, veränderbar ist. Insbesondere wird eine Topologie für die Verschaltung von einem Abgasentfeuchter (bzw. einer Befeuchtereinrichtung) und einem Abgasverflüssiger vorgeschlagen, die es ermöglicht, z. B. je nach Betriebspunkt der Brennstoffzellenanordnung und/oder in Abhängigkeit von Umgebungsbedingungen, dem Abgas vor oder nach dem Abgasentfeuchter flüssiges Wasser zu entziehen und so die Menge an gewonnenem Wasser zu maximieren, ohne die Funktionsfähigkeit des Abgasentfeuchters (bzw. der Befeuchtereinrichtung) zu beeinträchtigen.

Ein Vorteil der ersten Schaltkonfiguration besteht darin, dass Wasser vor dem Abgasentfeuchter mit geringerer (Wärme-)Energie verflüssigt werden kann. So ist der Molanteil und der Gesamtdruck des Wasserdampfs im Abgas vor dem Abgasentfeuchter höher als nach dem Abgasentfeuchter, wobei der Abgasentfeuchter üblicherweise ausgebildet ist, eine vorbestimmte Menge an Wasserdampf aus dem Abgas zu entziehen. Die vorbestimmte Menge kann dabei von Systemanforderungen der Brennstoffzellenanordnung im Betrieb abhängen, z. B. von zumindest einer Betriebsbedingung, einem Betriebspunkt und/oder zumindest einer Umgebungsbedingung. Dies führt zu einem erhöhten Partialdruck und damit einer erhöhten relativen Feuchte des Wasserdampfs vor dem Abgasentfeuchter, sodass der Wasserdampf vor dem Abgasentfeuchter unter einer geringeren Wärmeabfuhr kondensieren kann.

Nachteilig ist, dass der Abgasentfeuchter üblicherweise einen bestimmten Partialdruck zum Entfeuchten benötigt. Ist der Abgasentfeuchter als Teil einer Befeuchtereinrichtung ausgeführt , um z. B. angesaugte Luft mittels des entzogenen Wassers und/oder Wasserdampfes zu befeuchten, so benötigt der Befeuchter eine bestimmte Partialdruckdifferenz des Wasserdampfs von einer Entfeuchterseite zu einer Befeuchterseite der Befeuchtereinrichtung. Daher ist die Wassermenge, die vor dem Befeuchter abgeschieden werden kann, begrenzt.

Ein Vorteil der zweiten Schaltkonfiguration besteht darin, dass die Menge an gewonnenem Wasser nicht durch Systemanforderungen der Brennstoffzellenanordnung im Betrieb begrenzt ist.

Da die Vorteile der beiden Schaltkonfigurationen z. B. je nach Betriebsbedingung der Brennstoffzellenanordnung und/oder je nach Umgebungsbedingung abwechselnd überwiegen können, bietet die vorliegende Erfindung eine Topologie, die beide Positionsmöglichkeiten des Abgasentfeuchters und des Abgasverflüssigers schaltbar miteinander vereint.

Insgesamt führt die Erfindung daher zu einer Energieeffizienzsteigerung, einer Reduktion des Energieverbrauchs, und einer Reduktion des zusätzlichen Kühlbedarfs, bei gleichzeitiger Sicherstellung, dass die Membrane in den Brennstoffzellen im Betrieb ausreichend befeuchtet sind.

Gemäß einer besonderen Ausführungsform können die Schaltkonfigurationen ferner eine dritte Schaltkonfiguration umfassen, in der zumindest ein Teil des Abgases am Abgasverflüssiger vorbeiführbar ist. Es wurde festgestellt, dass die dritte Schaltkonfiguration besonders vorteilhaft in einem Übergangsbereich zwischen der ersten und zweiten Schaltkonfiguration ist, d. h., bei einer Umschaltung zwischen der ersten und zweiten Schaltkonfiguration aufgrund von Änderungen von Systemanforderungen der Brennstoffzellenanordnung kann eine Umschaltung zunächst in die dritte Schaltkonfiguration zu einer erhöhten Wassergewinnung mittels des Abgasverflüssigers führen, ohne die Funktionsfähigkeit des Abgasentfeuchters bzw. der Befeuchtereinrichtung zu beeinträchtigen.

Ferner wäre auch eine vierte Schaltkonfiguration vorstellbar, in der zumindest ein Teil des Abgases am Abgasentfeuchter vorbeiführbar ist. Auch eine fünfte Schaltkonfiguration wäre möglich, bei der zumindest ein Teil des Abgases nur den Abgasentfeuchter (und nicht den Abgasverflüssiger) durchströmt und ein weiterer Teil des Abgases nur den Abgasverflüssiger (und nicht den Abgasentfeuchter) durchströmt.

Gemäß einer Ausführungsform kann die Umschalteinrichtung eine erste Leitung umfassen, über die ein Ausgang des Abgasverflüssigers und ein Eingang des Abgasentfeuchters fluidisch verbindbar sind. In der ersten Leitung kann ein Rückschlagventil angeordnet sein, das vorzugsweise eine Strömung in Richtung des Abgasverflüssigers verhindert. Die Umschalteinrichtung kann eine zweite Leitung umfassen, über die ein Ausgang des Abgasentfeuchters und ein Eingang des Abgasverflüssigers fluidisch verbindbar sind. In der zweiten Leitung kann ein Rückschlagventil angeordnet sein, das vorzugsweise eine Strömung in Richtung des Abgasentfeuchters verhindert.

Gemäß einer Ausführungsvariante kann die Umschalteinrichtung mehrere, vorzugsweise zumindest drei, (steuerbare) Ventileinrichtungen umfassen. Die mehreren Ventileinrichtungen können jeweils als ein steuerbares Wegeventil und/oder ein steuerbares Umschaltventil ausgeführt sein.

Die mehreren Ventileinrichtungen können derart steuerbar (und/oder stellbar) sein, dass das Abgas in der ersten Schaltkonfiguration zunächst den Abgasverflüssiger durchströmt, über die erste Leitung zum Abgasentfeuchter geführt wird, und dann den Abgasentfeuchter durchströmt. Die mehreren Ventileinrichtungen können ferner derart steuerbar sein, dass das Abgas in der zweiten Schaltkonfiguration zunächst den Abgasentfeuchter durchströmt, über die zweite Leitung zum Abgasverflüssiger geführt wird, und dann den Abgasverflüssiger durchströmt. Mittels dieser steuerbaren Schalteinrichtung kann somit die fluidische Reihenfolge des Abgasverflüssigers und Abgasentfeuchters getauscht werden und dabei gleichzeitig die Reihenschaltung der beiden Komponenten aufrechterhalten bleiben.

Gemäß einer Ausführungsform kann die Umschalteinrichtung eine erste Ventileinrichtung umfassen.

Die erste Ventileinrichtung kann zwischen dem Einlass und dem Abgasentfeuchter und zwischen dem Einlass und dem Abgasverflüssiger angeordnet sein.

Alternativ oder ergänzend kann die erste Ventileinrichtung ausgebildet sein, in der ersten Schaltkonfiguration eine Fluidverbindung zwischen dem Einlass und dem Abgasentfeuchter zu trennen und eine Fluidverbindung zwischen dem Einlass und dem Abgasverflüssiger herzustellen. Die erste Ventileinrichtung kann ausgebildet sein, in der zweiten Schaltkonfiguration die Fluidverbindung zwischen dem Einlass und dem Abgasentfeuchter herzustellen und die Fluidverbindung zwischen dem Einlass und dem Abgasverflüssiger zu trennen. Die erste Ventileinrichtung bietet somit eine einfach umsetzbare Möglichkeit, das Abgas wahlweise zuerst zum Abgasentfeuchter oder zum Abgasverflüssiger zu führen und Wasser(dampf) entsprechend zuerst mit dem Abgasentfeuchter oder dem Abgasverflüssiger aus dem Abgas zu entziehen.

Gemäß einer Ausführungsform kann die erste Ventileinrichtung ferner ausgebildet sein, in der dritten Schaltkonfiguration die Fluidverbindung zwischen dem Einlass und dem Abgasentfeuchter herzustellen, und die Fluidverbindung zwischen dem Einlass und dem Abgasverflüssiger herzustellen. Die erste Ventileinrichtung bietet somit eine einfache Lösung, um einen Teil des Abgases direkt zum Abgasentfeuchter und gleichzeitig einen weiteren Teil des Abgases direkt zum Abgasverflüssiger zu führen.

Gemäß einer Ausführungsform kann die Umschalteinrichtung eine zweite Ventileinrichtung umfassen.

Die zweite Ventileinrichtung kann zwischen dem Abgasverflüssiger und dem Auslass angeordnet sein. Die zweite Ventileinrichtung kann vorzugsweise ferner zwischen dem Abgasverflüssiger und der ersten Leitung der Umschalteinrichtung angeordnet sein.

Alternativ oder ergänzend kann die zweite Ventileinrichtung ausgebildet sein, in der ersten Schaltkonfiguration, und vorzugsweise in der dritten Schaltkonfiguration, eine Fluidverbindung zwischen dem Abgasverflüssiger und dem Auslass zu trennen und eine Fluidverbindung zwischen dem Abgasverflüssiger und dem Abgasentfeuchter herzustellen. Die zweite Ventileinrichtung kann ausgebildet sein, in der zweiten Schaltkonfiguration die Fluidverbindung zwischen dem Abgasverflüssiger und dem Auslass herzustellen und die Fluidverbindung zwischen dem Abgasverflüssiger und dem Abgasentfeuchter zu trennen. Die zweite Ventileinrichtung bietet somit eine einfach umsetzbare Möglichkeit, das Abgas vom Abgasverflüssiger zum Abgasentfeuchter zu führen und Wasser(dampf) entsprechend mit dem Abgasentfeuchter zu entziehen, oder das Abgas nach der Durchströmung des Abgasverflüssigers direkt zum Ablass der Abgasnachbehandlungsvorrichtung zu führen.

Gemäß einer Ausführungsvariante kann die Umschalteinrichtung eine dritte Ventileinrichtung umfassen.

Die dritte Ventileinrichtung kann zwischen dem Abgasentfeuchter und dem Auslass angeordnet sein. Die dritte Ventileinrichtung kann vorzugsweise ferner zwischen dem Abgasentfeuchter und der zweiten Leitung der Umschalteinrichtung angeordnet sein.

Alternativ oder ergänzend kann die dritte Ventileinrichtung ausgebildet sein, in der ersten Schaltkonfiguration, und vorzugsweise in der dritten Schaltkonfiguration, eine Fluidverbindung zwischen dem Abgasentfeuchter und dem Abgasverflüssiger zu trennen und eine Fluidverbindung zwischen dem Abgasentfeuchter und dem Auslass herzustellen. Die dritte Ventileinrichtung kann ausgebildet sein, in der zweiten Schaltkonfiguration die Fluidverbindung zwischen dem Abgasentfeuchter und dem Abgasverflüssiger herzustellen und die Fluidverbindung zwischen dem Abgasentfeuchter und dem Auslass zu trennen. Die dritte Ventileinrichtung bietet somit eine einfach umsetzbare Möglichkeit, das Abgas vom Abgasentfeuchter zum Abgasverflüssiger zu führen und Wasser(dampf) entsprechend mit dem Abgasverflüssiger zu entziehen, oder das Abgas nach der Durchströmung des Abgasentfeuchters direkt zum Ablass der Abgasnachbehandlungsvorrichtung zu führen.

Gemäß einer Ausführungsform kann die Abgasnachbehandlungsvorrichtung ferner eine Steuereinrichtung umfassen, die ausgebildet ist, die Umschalteinrichtung zur Umschaltung zwischen zumindest zwei Schaltkonfigurationen des Abgasentfeuchters und des Abgasverflüssigers in Abhängigkeit zumindest einer der folgenden Bedingungen zu steuern:
- zumindest eine Betriebsbedingung und/oder ein Betriebspunkt der Brennstoffzellenanordnung;
- zumindest eine Umgebungsbedingung der Brennstoffzellenanordnung und/oder der Abgasnachbehandlungsvorrichtung, z. B. eine Umgebungstemperatur und/oder eine Umgebungsfeuchtigkeit;
- ein Gesamtdruck des Abgases bei Eintritt des Abgases in die Abgasnachbehandlungsvorrichtung; und/oder
- ein Anteil, vorzugsweise ein Molanteil, ein Massenstrom und/oder eine Stromdichte, an Wasserdampf im Abgas bei Eintritt des Abgases in die Abgasnachbehandlungsvorrichtung.

Die Bedingungen können fachmännisch durch Referenzmessungen festgelegt werden, unter der Vorgabe, die größte Wassergewinnung mittels des Abgasverflüssigers zu erzielen, ohne die Funktionsfähigkeit des Abgasentfeuchters bzw. der Befeuchtereinrichtung zu beeinträchtigen.

Die Abgasnachbehandlungsvorrichtung kann ferner Sensoriken zum Erfassen der zumindest einen Bedingung umfassen. Beispielsweise kann die Abgasnachbehandlungsvorrichtung eine Sensoreinrichtung zum Erfassen des Gesamtdrucks und/oder der Stromdichte umfassen, die z. B. stromauf des Abgasentfeuchters in der Abgasnachbehandlungsvorrichtung angeordnet ist.

Gemäß einem weiteren allgemeinen Aspekt der Erfindung wird eine Antriebsvorrichtung für ein Kraftfahrzeug, insbesondere ein Nutzfahrzeug, (und/oder ein Brennstoffzellensystem) bereitgestellt.

Die Antriebsvorrichtung umfasst eine Brennstoffzellenanordnung und der Abgasnachbehandlungsvorrichtung wie hierin offenbart.

Gemäß einer Ausführungsform kann die Antriebsvorrichtung ferner einen Ansaugtrakt, vorzugsweise eine Zuluftseite eines Kathodenpfads für die Brennstoffzellenanordnung, zur Bereitstellung von Luft, insbesondere Sauerstoff, für die Brennstoffzellenanordnung umfassen.

Die Antriebsvorrichtung kann ferner einen Abgastrakt, vorzugsweise eine Abgasseite des Kathodenpfads, zum Abführen von Abgas, insbesondere von mit Wasserdampf und/oder Wasser angereicherter Luft, aus der Brennstoffzellenanordnung umfassen. Die Abgasnachbehandlungsvorrichtung kann als Teil des Abgastrakts ausgeführt sein. Das Wasser (bzw. der Wasserdampf) wird üblicherweise auf Kathodenseite der Brennstoffzellenanordnung erzeugt und über die Abgasseite des Kathodenpfads abgeführt. Dementsprechend kann das Wasser durch die Anordnung der Abgasnachbehandlungsvorrichtung auf der Abgasseite des Kathodenpfads auf besonders effiziente Weise entzogen und weiter genutzt werden.

Gemäß einer Ausführungsform kann der Abgasentfeuchter als Teil einer Befeuchtereinrichtung zur Übertragung des aus dem Abgas entzogenen Wasserdampfs und/oder dem aus dem Abgas entzogenen Wasser von dem Abgastrakt in den Ansaugtrakt ausgeführt sein. Dadurch kann ein Teil des erzeugten Wassers und/oder Wasserdampfs dazu genutzt werden, die angesaugte Luft ausreichend zu befeuchten und auf diese Weise die benötigte Feuchtigkeit in die Brennstoffzellen einzubringen. Hierdurch entsteht ein besonders effizienter Kreislauf zur Wasserwiederverwendung.

Gemäß einer Ausführungsvariante kann die Umschalteinrichtung ausgebildet sein, in Abhängigkeit einer Partialdruckdifferenz des mittels der Befeuchtereinrichtung übertragenen Wasserdampfs und/oder Wassers zwischen den Schaltkonfigurationen umzuschalten. Eine Übertragung des Wasserdampfs und/oder Wassers ist erst ab einer vorbestimmten Partialdruckdifferenz (in Abhängigkeit z. B. zumindest einer Betriebsbedingung und/oder Umgebungsbedingung) möglich. Unterhalb der vorbestimmten Partialdruckdifferenz ist in die zweite Schaltkonfiguration umzuschalten. Bei einer Partialdruckdifferenz gleich oder größer der vorbestimmten Partialdruckdifferenz ist in die erste Schaltkonfiguration (oder in einem Übergangsbereich zunächst in die dritte Schaltkonfiguration) umzuschalten.

Gemäß einem weiteren allgemeinen Aspekt der Erfindung wird ein Kraftfahrzeug, vorzugsweise ein Nutzfahrzeug, mit der Antriebsvorrichtung wie hierin offenbart und/oder der Abgasnachbehandlungsvorrichtung wie hierin offenbart bereitgestellt.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Abgasnachbehandlungsvorrichtung gemäß einem Ausführungsbeispiel der vorliegenden Offenbarung;
- Figur 2: eine schematische Ansicht der Abgasnachbehandlungsvorrichtung mit einer Darstellung der ersten und zweiten Schaltkonfiguration;
- Figur 3: eine schematische Ansicht der Abgasnachbehandlungsvorrichtung mit einer Darstellung der dritten Schaltkonfiguration;
- Figur 4: Verläufe eines Massenstroms an kondensiertem Wasser, welches in einem Wasserabscheider abgeschieden wird, in Abhängigkeit von einer Stromdichte; und
- Figur 5: eine schematische Ansicht einer Antriebsvorrichtung gemäß einem Ausführungsbeispiel der vorliegenden Offenbarung.

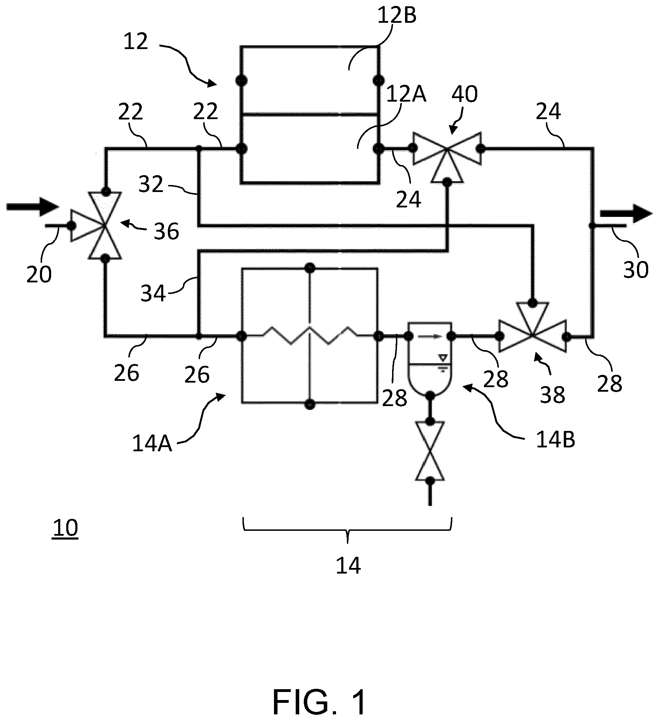

Figur 1 zeigt schematisch eine Abgasnachbehandlungsvorrichtung 10 für eine Brennstoffzellenanordnung 50. Die Abgasnachbehandlungsvorrichtung 10 umfasst einen Einlass 20, der mit der Brennstoffzellenanordnung 50 fluidisch verbindbar ist, und einen Auslass 30.

Die Abgasnachbehandlungsvorrichtung 10 umfasst ferner einen Abgasentfeuchter 12A zum Entziehen von Wasser und/oder Wasserdampf aus dem Abgas, und einen Abgasverflüssiger 14 zum Verflüssigen und/oder Abscheiden von Wasser aus dem Abgas.

Der Abgasentfeuchter 12A kann als Teil einer Befeuchtereinrichtung 12 ausgeführt sein, wobei der aus dem Abgas entzogene Wasserdampf und/oder das aus dem Abgas entzogene Wasser vom Abgasentfeuchter 12A in einen Befeuchter 12B der Befeuchtereinrichtung 12 übertragen werden kann.

Der Abgasverflüssiger 14 kann zumindest eine Wasserkondensationseinrichtung 14A und einen Wasserabscheider 14B, der vorzugsweise der Wasserkondensationseinrichtung 14A fluidisch nachgeschaltet ist, aufweisen.

Die Abgasnachbehandlungsvorrichtung 10 umfasst ferner eine fluidische Umschalteinrichtung 32, 34, 36, 38, 40 zur Umschaltung zwischen zumindest zwei Schaltkonfigurationen des Abgasentfeuchters 12A und des Abgasverflüssigers 14.

Die Schaltkonfigurationen umfassen eine erste Schaltkonfiguration, in der der Abgasverflüssiger 14 fluidisch vor den Abgasentfeuchter 12A geschaltet ist, und eine zweite Schaltkonfiguration, in der der Abgasverflüssiger 14 fluidisch hinter den Abgasentfeuchter 12A geschaltet ist. Die Schaltkonfigurationen können ferner eine dritte Schaltkonfiguration umfassen, in der zumindest ein Teil des Abgases am Abgasverflüssiger 14 vorbeiführbar ist.

Der Abgasentfeuchter 12A und der Abgasverflüssiger 14 sind zweckmäßig fluidisch in Reihe geschaltet. Diese Reihenschaltung kann insbesondere wahlweise über eine erste Leitung 32, über die ein Ausgang des Abgasverflüssigers 14 und ein Eingang des Abgasentfeuchters 12A fluidisch verbindbar sind, oder über eine zweite Leitung 34, über die ein Ausgang des Abgasentfeuchters 12A und ein Eingang des Abgasverflüssigers 14 fluidisch verbindbar sind, herstellbar sein.

Die Umschalteinrichtung 32, 34, 36, 38, 40 kann, neben der ersten Leitung 32 und zweiten Leitung 34, eine erste Ventileinrichtung 36, eine zweite Ventileinrichtung 38 und eine dritte Ventileinrichtung 40 umfassen. Die Ventileinrichtungen 36, 38, 40 können z. B. jeweils als ein steuerbares Wegeventil und/oder ein steuerbares Umschaltventil ausgeführt sein.

Die erste Ventileinrichtung 36 kann zwischen dem Einlass 20 und dem Abgasentfeuchter 12A und zwischen dem Einlass 20 und dem Abgasverflüssiger 14 angeordnet sein. Die erste Ventileinrichtung 36 und der Abgasentfeuchter 12A können über eine Abgasentfeuchter-Zuführleitung 22 verbunden sein. Ferner können die erste Ventileinrichtung 36 und der Abgasverflüssiger über eine, vorzugsweise zumindest abschnittweise parallel zur Abgasentfeuchter-Zuführleitung 22 ausgebildete, Abgasverflüssiger-Zuführleitung 26 verbunden sein.

Die zweite Ventileinrichtung 38 kann zwischen dem Abgasverflüssiger 14 und dem Auslass 30, und vorzugsweise zwischen dem Abgasverflüssiger 14 und der ersten Leitung 32 angeordnet sein. Die zweite Ventileinrichtung 38 kann z. B. in einer Abgasentfeuchter-Abführleitung 24, die den Abgasentfeuchter 12A und den Auslass 30 verbindet, angeordnet sein. Ferner kann die zweite Ventileinrichtung 38 mit einem Ende der ersten Leitung 32 verbunden sein, wobei ein weiteres Ende der ersten Leitung 32 in der Abgasentfeuchter-Zuführleitung 22 mündet.

Die dritte Ventileinrichtung 40 kann zwischen dem Abgasentfeuchter 12A und dem Auslass 30, und vorzugsweise zwischen dem Abgasentfeuchter 12A und der zweiten Leitung 34 angeordnet sein. Die dritte Ventileinrichtung 40 kann z. B. in einer, vorzugsweise zumindest abschnittweise parallel zur Abgasentfeuchter-Abführleitung 24 ausgebildeten, Abgasverflüssiger-Abführleitung 28, die den Abgasverflüssiger 14 und den Auslass 30 verbindet, angeordnet sein. Ferner kann die dritte Ventileinrichtung 40 mit einem Ende der zweiten Leitung 34 verbunden sein, wobei ein weiteres Ende der zweiten Leitung 34 in der Abgasverflüssiger-Zuführleitung 26 mündet.

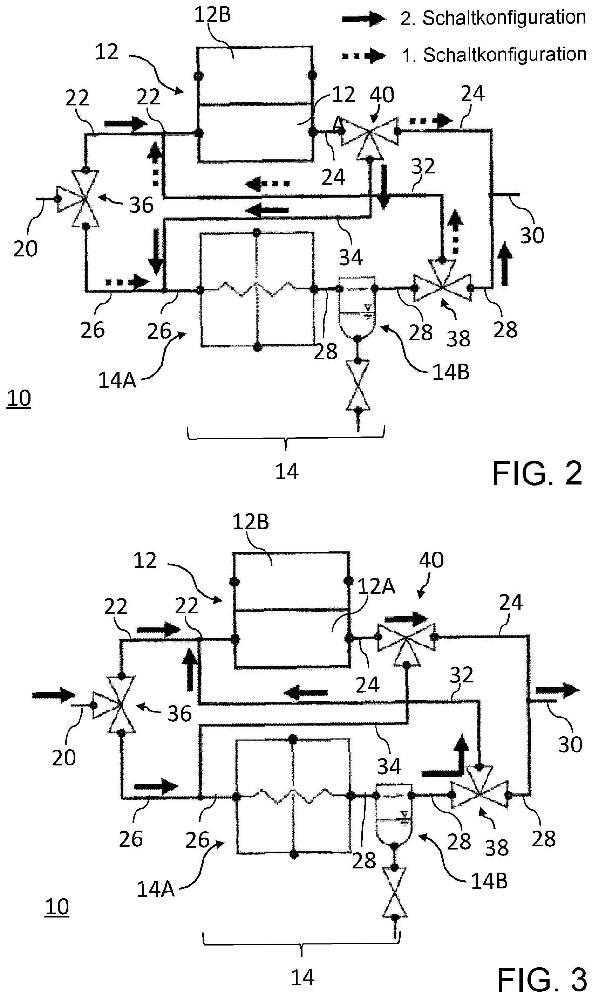

In Figur 2 ist die Strömungsrichtung bzw. der Strömungsverlauf des Abgases in der ersten Schaltkonfiguration (gestrichelte Pfeile) und in der zweiten Schaltkonfiguration (durchgezogene Pfeile) dargestellt.

In der ersten Schaltkonfiguration stellt die erste Ventileinrichtung 36 eine Fluidverbindung zwischen dem Einlass 20 und dem Abgasverflüssiger 14 her und trennt eine Fluidverbindung zwischen dem Einlass 20 und dem Abgasentfeuchter 12A, sodass das Abgas vom Einlass 20 zunächst zum Abgasverflüssiger 14 geführt wird und den Abgasverflüssiger 14 durchströmt.

Die zweite Ventileinrichtung 38 stellt eine Fluidverbindung zwischen dem Abgasverflüssiger 14 und dem Abgasentfeuchter 12A her und trennt eine Fluidverbindung zwischen dem Abgasverflüssiger 14 und dem Auslass 30, sodass das Abgas über die zweite Leitung 32 vom Abgasverflüssiger 14 zum Abgasentfeuchter 12A geführt wird und dann den Abgasverflüssiger 14 durchströmt.

Die dritte Ventileinrichtung 40 stellt eine Fluidverbindung zwischen dem Abgasentfeuchter 12A und dem Auslass 30 her und trennt eine Fluidverbindung zwischen dem Abgasentfeuchter 12A und dem Abgasverflüssiger 14, sodass das Abgas schließlich zum Auslass 30 geführt wird, um z. B. an die Umgebung ausgelassen zu werden.

In der zweiten Schaltkonfiguration stellt die erste Ventileinrichtung 36 die Fluidverbindung zwischen dem Einlass 20 und dem Abgasentfeuchter 12A her und trennt die Fluidverbindung zwischen dem Einlass 20 und dem Abgasverflüssiger 14, sodass das Abgas vom Einlass 20 zunächst zum Abgasentfeuchter 12A geführt wird und den Abgasentfeuchter 12A durchströmt.

Die dritte Ventileinrichtung 40 stellt die Fluidverbindung zwischen dem Abgasentfeuchter 12A und dem Abgasverflüssiger 14 her und die Fluidverbindung zwischen dem Abgasentfeuchter 12A und dem Auslass 30, sodass das Abgas über die zweite Leitung 34 vom Abgasentfeuchter 12A zum Abgasverflüssiger 14 geführt wird und dann den Abgasverflüssiger 14 durchströmt.

Die zweite Ventileinrichtung 38 stellt die Fluidverbindung zwischen dem Abgasverflüssiger 14 und dem Auslass 30 her und trennt die Fluidverbindung zwischen dem Abgasverflüssiger 14 und dem Abgasentfeuchter 12A, sodass das Abgas schließlich zum Auslass 30 geführt wird, um z. B. an die Umgebung ausgelassen zu werden.

In Figur 3 ist die Strömungsrichtung bzw. der Strömungsverlauf des Abgases in der dritten Schaltkonfiguration (durchgezogene Pfeile) dargestellt.

Die zweite Ventileinrichtung 38 und die dritte Ventileinrichtung 40 sind wie in der ersten Schaltkonfiguration geschaltet, während die erste Ventilerrichtung 36 sowohl die Fluidverbindung zwischen dem Einlass 20 und dem Abgasverflüssiger 14 als auch die Fluidverbindung zwischen dem Einlass 20 und dem Abgasentfeuchter 12A herstellt.

Somit wird das Abgas von der ersten Ventileinrichtung 36 aufgeteilt, sodass ein erster Teil des Abgases zum Abgasverflüssiger 14 und gleichzeitig ein zweiter Teil des Abgases zum Abgasentfeuchter 12A geführt wird.

Der erste Teil des Abgases wird nach der Durchströmung des Abgasverflüssigers 14 über die zweite Leitung 32 zum Abgasentfeuchter 12A geführt, durchströmt den Abgasverflüssiger 14, und wird schließlich zum Auslass 30 geführt. Der zweite Teil des Abgases wird nach der Durchströmung des Abgasentfeuchters 12A zum Auslass geführt, ohne den Abgasverflüssiger 14 durchströmt zu haben.

Die Abgasentfeuchter-Zuführleitung 22 und die Abgasentfeuchter-Abführleitung 24 dienen für den zweiten Teil des Abgases somit als ein Bypass, der den zweiten Teil am Abgasverflüssiger vorbeiführt.

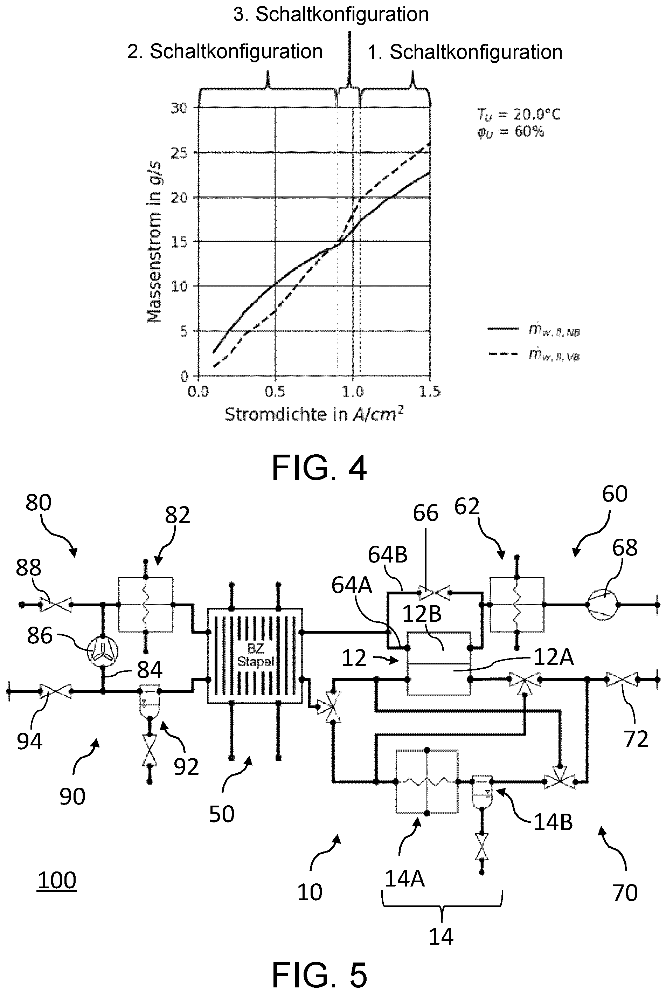

Figur 4 zeigt beispielhaft, welche Schaltkonfiguration in Abhängigkeit der Stromdichte des Wasserdampfs zu wählen ist, um so die größte Wassergewinnung mittels des Abgasverflüssigers 14 zu erzielen, ohne die Funktionsfähigkeit des Abgasentfeuchters 12A bzw. der Befeuchtereinrichtung 12 zu beeinträchtigen.

So sind Verläufe eines Massenstroms an mit der Wasserkondensationseinrichtung 14A kondensiertem Wasser, welches im Wasserabscheider 14B abgeschieden wird, in Abhängigkeit von einer Stromdichte aufgezeigt, und zwar vor dem Abgasentfeuchter 12A (gestrichelte Linie) und hinter dem Abgasentfeuchter 12A (durchgezogene Linie) in Strömungsrichtung des Abgases.

Für eine Umgebungstemperatur von 20°C und einer Umgebungsfeuchtigkeit von 60% steigen beide Massenströme mit steigender Stromdichte stetig an, wobei der Massenstrom hinter dem Abgasentfeuchter 12A unterhalb einer Stromdichte von etwa 0,9 A/cm² stets größer ist als der Massenstrom vor dem Abgasentfeuchter 12A. In diesem Bereich, d. h. unterhalb einer Stromdichte von etwa 0,9 A/cm², ist die zweite Schaltkonfiguration zu wählen, um so die größte Wassergewinnung mittels des Abgasverflüssigers 14 zu erzielen.

Oberhalb einer Stromdichte von etwa 0,9 A/cm² ist der Massenstrom vor dem Abgasentfeuchter 12A stets größer als der Massenstrom hinter dem Abgasentfeuchter 12A. Es hat sich herausgestellt, dass in einem Übergangsbereich von etwa 0,9 A/cm² bis etwa 1,05 A/cm² die dritte Schaltkonfiguration zur größten Wassergewinnung führt. Bei einer Stromdichte oberhalb von etwa 1,05 A/cm² ist die erste Schaltkonfiguration zu wählen.

Allgemein kann die Umschalteinrichtung 32, 34, 36, 38, 40 zur Umschaltung zwischen den Schaltkonfigurationen in Abhängigkeit zumindest einer der folgenden Bedingungen gesteuert werden:
- zumindest eine Betriebsbedingung und/oder ein Betriebspunkt der Brennstoffzellenanordnung 50,
- zumindest eine Umgebungsbedingung der Brennstoffzellenanordnung 50 und/oder der Abgasnachbehandlungsvorrichtung 10,
- ein Gesamtdruck des Abgases bei Eintritt des Abgases in die Abgasnachbehandlungsvorrichtung 10, und/oder
- ein Anteil, vorzugsweise ein Molanteil, ein Massenstrom und/oder eine Stromdichte, an Wasserdampf im Abgas bei Eintritt des Abgases in die Abgasnachbehandlungsvorrichtung 10.

Dazu kann die Abgasnachbehandlungsvorrichtung 10 ferner eine (nicht gezeigte) Steuereinrichtung zur Steuerung der Umschalteinrichtung 32, 34, 36, 38, 40 umfassen.

Figur 5 zeigt schematisch eine Antriebsvorrichtung 100, welche eine Brennstoffzellenanordnung 50 und die Abgasnachbehandlungsvorrichtung 10 umfasst.

Die Antriebsvorrichtung 100 kann ferner einen Ansaugtrakt 60 und einen Abgastrakt 70 umfassen.

Der Ansaugtrakt 60 dient zweckmäßig zur Bereitstellung von Luft, insbesondere Sauerstoff, für die Brennstoffzellenanordnung 50. Luft, die nicht in der Brennstoffzellenanordnung 50 reagiert hat, wird, angereichert mit dem in der Brennstoffzellenanordnung 50 entstandenen Wasser(dampf), über den Abgastrakt 70 abgeführt. Die Abgasnachbehandlungsvorrichtung 10 kann dabei als Teil des Abgastrakts 70 ausgeführt sein.

Da die Luft, insbesondere der in der Luft vorhandene Sauerstoff, den Kathoden in den Brennstoffzellen der Brennstoffzellenanordnung 50 zugeführt wird, werden der Ansaugtrakt 60 und der Abgastrakt 70 auch als Kathodenpfad bezeichnet. Der Ansaugtrakt 60 bildet dabei die Zuluftseite des Kathodenpfads und der Abgastrakt 70 bildet die Abgasseite des Kathodenpfads.

Der Befeuchter 12B der Befeuchtereinrichtung 12 kann im Ansaugtrakt 60 angeordnet sein, um so den aus dem Abgas entzogenen Wasserdampf und/oder das aus dem Abgas entzogene Wasser von dem Abgastrakt 60 in den Ansaugtrakt 70 zu übertragen und so die angesaugte Luft zu befeuchten.

Der Befeuchter 12B kann z. B. in einer Leitung 64A des Ansaugtrakts 60 angeordnet sein, wobei eine weitere Leitung 64B des Ansaugtrakts parallel zur Leitung 64A angeordnet sein kann. Die Leitung 64B kann ein Ventil 66 aufweisen, um den Anteil an Luft, der durch die Leitung 64B geführt wird, zu steuern. Entsprechend wird dadurch auch der Anteil an Luft, der durch die Leitung 64A geführt wird und damit zusätzlich durch den Befeuchter 12B befeuchtet wird, beeinflusst.

Der Ansaugtakt 60 kann ferner einen Verdichter 68 zum Verdichten der Luft umfassen.

Die Antriebsvorrichtung 100 kann ferner einen zweiten Ansaugtrakt 80 und einen zweiten Abgastrakt 90 umfassen.

Der zweite Ansaugtrakt 80 dient zur Bereitstellung von Wasserstoff aus einer (nicht gezeigten) Wasserstoffquelle für die Brennstoffzellenanordnung 50. Wasserstoff, der nicht in der Brennstoffzellenanordnung 50 reagiert hat, kann über den zweiten Abgastrakt 90 wieder aus der Brennstoffzellenanordnung, z. B. in Richtung der Wasserstoffquelle, abgeführt werden. Ferner ist es auch möglich, dass der nicht reagierte Wasserstoff aus dem zweiten Abgastrakt 90 in den zweiten Ansaugtrakt 80 zurückgeführt wird, z. B. über eine Zwischenleitung 84, die eine Fördereinrichtung 86 zur Förderung des Wasserstoffs in Richtung des zweiten Ansaugtrakts 80 aufweisen kann.

Da der Wasserstoff den Anoden in den Brennstoffzellen der Brennstoffzellenanordnung 50 zugeführt wird, werden der zweite Ansaugtrakt 80 und der zweite Abgastrakt 90 auch als Anodenpfad bezeichnet. Der zweite Ansaugtrakt 80 bildet dabei die Zuluftseite des Anodenpfads und der zweite Abgastrakt 90 bildet die Abgasseite des Anodenpfads.

Üblicherweise wird das Wasser bzw. der Wasserdampf auf Kathodenseite der Brennstoffzellenanordnung 50 erzeugt und mit der nicht reagierten Luft über den Abgastrakt 70 abgeführt. Da es möglich ist, dass ein kleiner Teil des Wassers mit dem nicht reagierten Wasserstoff über den zweiten Abgastrakt 90 abgeführt wird, kann im zweiten Abgastrakt 90 z. B. einen Wasserabscheider 92 angeordnet sein. Ferner ist auch vorstellbar, dass der zweite Abgastrakt 90 eine Abgasnachbehandlungsvorrichtung analog zur Abgasnachbehandlungsvorrichtung 10 aufweist.

Der Ansaugtrakt 60 kann ferner einen Wärmeübertrager 62, z. B. einen Ladeluftkühler, aufweisen. Der zweite Ansaugtrakt 80 kann ferner einen Wärmeübertrager 82, z. B. einen Kühler oder Heizer für den Wasserstoff, aufweisen. Die beiden Wärmeübertrager 62, 82 können für eine thermische Konditionierung der zugeführten Luft bzw. des zugeführten Wasserstoffs genutzt werden.

Ferner können der Ansaugtrakt 60, der Abgastrakt 70, der zweite Ansaugtrakt 80 und/oder der zweite Abgastrakt 90 jeweils ein Ventil 72, 88, 94 zur Regulierung des jeweiligen Gases aufweisen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Abgasnachbehandlungsvorrichtung
- 12: Befeuchtereinrichtung
- 12A: Abgasentfeuchter
- 12B: Befeuchter
- 14: Abgasverflüssiger
- 14A: Wasserkondensationseinrichtung
- 14B: Wasserabscheider
- 20: Einlass
- 22: Abgasentfeuchter-Zuführleitung
- 24: Abgasentfeuchter-Abführleitung
- 26: Abgasverflüssiger-Zuführleitung
- 28: Abgasverflüssiger- Abführleitung
- 30: Auslass
- 32: Erste Leitung
- 34: Zweite Leitung
- 36: Erste Ventileinrichtung
- 38: Zweite Ventileinrichtung
- 40: Dritte Ventileinrichtung
- 50: Brennstoffzellenanordnung
- 60: Ansaugtrakt
- 62: Wärmeübertrager
- 64A, 64B: Leitung
- 66, 72, 88, 94: Ventil
- 68: Verdichter
- 70: Abgastrakt
- 80: Zweiter Ansaugtrakt
- 82: Wärmeübertrager
- 84: Zwischenleitung
- 86: Fördereinrichtung
- 90: Zweiter Abgastrakt
- 92: Wasserabscheider
- 100: Antriebsvorrichtung

## Patentansprüche

1. Abgasnachbehandlungsvorrichtung (10) für eine Brennstoffzellenanordnung (50), umfassend:
einen Einlass (20), der zur Aufnahme eines aus der Brennstoffzellenanordnung (50) abgeführten Abgases, insbesondere von mit Wasserdampf und/oder Wasser angereicherter Luft, mit der Brennstoffzellenanordnung (50) fluidisch verbindbar ist;
einen Auslass (30) zum Auslassen des Abgases nach einem Durchströmen der Abgasnachbehandlungsvorrichtung (10);
einen Abgasentfeuchter (12A) zum Entziehen von Wasser und/oder Wasserdampf aus dem Abgas;
einen Abgasverflüssiger (14) zum Verflüssigen und/oder Abscheiden von Wasser aus dem Abgas, wobei der Abgasentfeuchter (12A) und der Abgasverflüssiger (14) fluidisch in Reihe geschaltet sind; und
eine fluidische Umschalteinrichtung (32, 34, 36, 38, 40) zur Umschaltung zwischen zumindest zwei Schaltkonfigurationen des Abgasentfeuchters (12A) und des Abgasverflüssigers (14), wobei die Schaltkonfigurationen umfassen:
a) eine erste Schaltkonfiguration, in der der Abgasverflüssiger (14) fluidisch vor den Abgasentfeuchter (12A) geschaltet ist, und
b) eine zweite Schaltkonfiguration, in der der Abgasverflüssiger (14) fluidisch hinter den Abgasentfeuchter (12A) geschaltet ist.

2. Abgasnachbehandlungsvorrichtung (10) nach Anspruch 1, wobei die Schaltkonfigurationen ferner eine dritte Schaltkonfiguration umfassen, in der zumindest ein Teil des Abgases am Abgasverflüssiger (14) vorbeiführbar ist.

3. Abgasnachbehandlungsvorrichtung (10) nach Anspruch 1 oder 2, wobei die Umschalteinrichtung (32, 34, 36, 38, 40) eine erste Leitung (32), über die ein Ausgang des Abgasverflüssigers (14) und ein Eingang des Abgasentfeuchters (12A) fluidisch verbindbar sind, und eine zweite Leitung (34), über die ein Ausgang des Abgasentfeuchters (12A) und ein Eingang des Abgasverflüssigers (14) fluidisch verbindbar sind, umfasst.

4. Abgasnachbehandlungsvorrichtung (10) nach einem der vorhergehenden Ansprüche, wobei die Umschalteinrichtung (32, 34, 36, 38, 40) mehrere, vorzugsweise zumindest drei, Ventileinrichtungen (36, 38, 40) umfasst.

5. Abgasnachbehandlungsvorrichtung (10) nach Anspruch 3 und 4, wobei die mehreren Ventileinrichtungen (36, 38, 40) derart steuerbar sind, dass das Abgas
a) in der ersten Schaltkonfiguration zunächst den Abgasverflüssiger (14) durchströmt, über die erste Leitung (32) zum Abgasentfeuchter (12A) geführt wird, und dann den Abgasentfeuchter (12A) durchströmt, und
a) in der zweiten Schaltkonfiguration zunächst den Abgasentfeuchter (12A) durchströmt, über die zweite Leitung (34) zum Abgasverflüssiger (14) geführt wird, und dann den Abgasverflüssiger (14) durchströmt.

6. Abgasnachbehandlungsvorrichtung (10) nach Anspruch 4 oder 5, wobei die mehreren Ventileinrichtungen (36, 38, 40) jeweils als ein steuerbares Wegeventil und/oder ein steuerbares Umschaltventil ausgeführt sind.

7. Abgasnachbehandlungsvorrichtung (10) nach einem der vorhergehenden Ansprüche, wobei die Umschalteinrichtung (32, 34, 36, 38, 40) eine erste Ventileinrichtung (36) umfasst, die zwischen dem Einlass (20) und dem Abgasentfeuchter (12A) und zwischen dem Einlass (20) und dem Abgasverflüssiger (14) angeordnet ist.

8. Abgasnachbehandlungsvorrichtung (10) nach einem der vorhergehenden Ansprüche, wobei die Umschalteinrichtung (32, 34, 36, 38, 40) eine erste Ventileinrichtung (36) umfasst, die ausgebildet ist,
a) in der ersten Schaltkonfiguration eine Fluidverbindung zwischen dem Einlass (20) und dem Abgasentfeuchter (12A) zu trennen und eine Fluidverbindung zwischen dem Einlass (20) und dem Abgasverflüssiger (14) herzustellen, und/oder
b) in der zweiten Schaltkonfiguration die Fluidverbindung zwischen dem Einlass (20) und dem Abgasentfeuchter (12A) herzustellen und die Fluidverbindung zwischen dem Einlass (20) und dem Abgasverflüssiger (14) zu trennen.

9. Abgasnachbehandlungsvorrichtung (10) nach Anspruch 2 und 8, wobei die erste Ventileinrichtung (36) ferner ausgebildet ist, in der dritten Schaltkonfiguration die Fluidverbindung zwischen dem Einlass (20) und dem Abgasentfeuchter (12A) herzustellen, und die Fluidverbindung zwischen dem Einlass (20) und dem Abgasverflüssiger (14) herzustellen.

10. Abgasnachbehandlungsvorrichtung (10) nach einem der vorhergehenden Ansprüche, wobei die Umschalteinrichtung (32, 34, 36, 38, 40) eine zweite Ventileinrichtung (38) umfasst, die zwischen dem Abgasverflüssiger (14) und dem Auslass (30), und vorzugsweise zwischen dem Abgasverflüssiger (14) und einer ersten Leitung (32) der Umschalteinrichtung (32, 34, 36, 38, 40), angeordnet ist.

11. Abgasnachbehandlungsvorrichtung (10) nach einem der vorhergehenden Ansprüche, wobei die Umschalteinrichtung (32, 34, 36, 38, 40) eine zweite Ventileinrichtung (38) umfasst, die ausgebildet ist,
a) in der ersten Schaltkonfiguration, und vorzugsweise in der dritten Schaltkonfiguration, eine Fluidverbindung zwischen dem Abgasverflüssiger (14) und dem Auslass (30) zu trennen und eine Fluidverbindung zwischen dem Abgasverflüssiger (14) und dem Abgasentfeuchter (12A) herzustellen, und/oder
b) in der zweiten Schaltkonfiguration die Fluidverbindung zwischen dem Abgasverflüssiger (14) und dem Auslass (30) herzustellen und die Fluidverbindung zwischen dem Abgasverflüssiger (14) und dem Abgasentfeuchter (12A) zu trennen.

12. Abgasnachbehandlungsvorrichtung (10) nach einem der vorhergehenden Ansprüche, wobei die Umschalteinrichtung (32, 34, 36, 38, 40) eine dritte Ventileinrichtung (40) umfasst, die zwischen dem Abgasentfeuchter (12A) und dem Auslass (30), und vorzugsweise zwischen dem Abgasentfeuchter (12A) und einer zweiten Leitung (34) der Umschalteinrichtung (32, 34, 36, 38, 40), angeordnet ist.

13. Abgasnachbehandlungsvorrichtung (10) nach einem der vorhergehenden Ansprüche, wobei die Umschalteinrichtung (32, 34, 36, 38, 40) eine dritte Ventileinrichtung (40) umfasst, die ausgebildet ist,
a) in der ersten Schaltkonfiguration, und vorzugsweise in einer dritten Schaltkonfiguration, eine Fluidverbindung zwischen dem Abgasentfeuchter (12A) und dem Abgasverflüssiger (14) zu trennen und eine Fluidverbindung zwischen dem Abgasentfeuchter (12A) und dem Auslass (30) herzustellen, und/oder
b) in der zweiten Schaltkonfiguration die Fluidverbindung zwischen dem Abgasentfeuchter (12A) und dem Abgasverflüssiger (14) herzustellen und die Fluidverbindung zwischen dem Abgasentfeuchter (12A) und dem Auslass (30) zu trennen.

14. Abgasnachbehandlungsvorrichtung (10) nach einem der vorhergehenden Ansprüche, wobei die Abgasnachbehandlungsvorrichtung (10) ferner eine Steuereinrichtung umfasst, die ausgebildet ist, die Umschalteinrichtung (32, 34, 36, 38, 40) zur Umschaltung zwischen zumindest zwei Schaltkonfigurationen des Abgasentfeuchters (12A) und des Abgasverflüssigers (14) in Abhängigkeit zumindest einer der folgenden Bedingungen zu steuern:
- zumindest eine Betriebsbedingung und/oder ein Betriebspunkt der Brennstoffzellenanordnung (50);
- zumindest eine Umgebungsbedingung der Brennstoffzellenanordnung (50) und/oder der Abgasnachbehandlungsvorrichtung (10);
- ein Gesamtdruck des Abgases bei Eintritt des Abgases in die Abgasnachbehandlungsvorrichtung (10); und/oder
- ein Anteil, vorzugsweise ein Molanteil, ein Massenstrom und/oder eine Stromdichte, an Wasserdampf im Abgas bei Eintritt des Abgases in die Abgasnachbehandlungsvorrichtung (10).

15. Abgasnachbehandlungsvorrichtung (10) nach einem der vorhergehenden Ansprüche, wobei der Abgasverflüssiger (14) zumindest eine Wasserkondensationseinrichtung (14A) und einen Wasserabscheider (14B), der vorzugsweise der Wasserkondensationseinrichtung (14A) fluidisch nachgeschaltet ist, aufweist.

16. Antriebsvorrichtung (100) für ein Kraftfahrzeug, insbesondere ein Nutzfahrzeug, umfassend:
eine Brennstoffzellenanordnung (50); und
eine Abgasnachbehandlungsvorrichtung (10) nach einem der vorhergehenden Ansprüche.

17. Antriebsvorrichtung (100) nach Anspruch 16, ferner umfassend:
einen Ansaugtrakt (60), vorzugsweise eine Zuluftseite eines Kathodenpfads für die Brennstoffzellenanordnung (50), zur Bereitstellung von Luft, insbesondere Sauerstoff, für die Brennstoffzellenanordnung (50); und
einen Abgastrakt (70), vorzugsweise eine Abgasseite des Kathodenpfads, zum Abführen von Abgas, insbesondere von mit Wasserdampf und/oder Wasser angereicherter Luft, aus der Brennstoffzellenanordnung (50), wobei die Abgasnachbehandlungsvorrichtung (10) als Teil des Abgastrakts (70) ausgeführt ist.

18. Antriebsvorrichtung (100) nach Anspruch 17, wobei der Abgasentfeuchter (12A) als Teil einer Befeuchtereinrichtung (12) zur Übertragung des aus dem Abgas entzogenen Wasserdampfs und/oder dem aus dem Abgas entzogenen Wasser von dem Abgastrakt in den Ansaugtrakt ausgeführt ist.

19. Antriebsvorrichtung (100) nach Anspruch 18, wobei die Umschalteinrichtung (32, 34, 36, 38, 40) ausgebildet, in Abhängigkeit einer Partialdruckdifferenz des mittels der Befeuchtereinrichtung (12) übertragenen Wasserdampfs und/oder Wassers zwischen den Schaltkonfigurationen umzuschalten.

20. Kraftfahrzeug, vorzugsweise Nutzfahrzeug, mit einer Antriebsvorrichtung (100) nach einem der Ansprüche 15 bis 19 und/oder einer Abgasnachbehandlungsvorrichtung (10) nach einem der Ansprüche 1 bis 14.

## Claims

1. Exhaust gas aftertreatment device (10) for a fuel cell arrangement (50), comprising:
an inlet (20) which is fluidically connectable to the fuel cell arrangement (50) for receiving exhaust gas discharged from the fuel cell arrangement (50), preferably air enriched with water vapour and/or water;
an outlet (30) for discharging the exhaust gas after it has flowed through the exhaust gas aftertreatment device (10);
an exhaust gas dehumidifier (12A) for removing water and/or water vapour from the exhaust gas;
an exhaust gas condenser (14) for liquefying and/or separating water from the exhaust gas, wherein the exhaust gas dehumidifier (12A) and the exhaust gas condenser (14) are fluidically connected in series; and
a fluidic switching device (32, 34, 36, 38, 40) for switching between at least two switching configurations of the exhaust gas dehumidifier (12A) and the exhaust gas condenser (14), wherein the switching configurations comprise:
a) a first switching configuration in which the exhaust gas condenser (14) is fluidically connected upstream of the exhaust gas dehumidifier (12A), and
b) a second switching configuration in which the exhaust gas condenser (14) is fluidically connected downstream of the exhaust gas dehumidifier (12A).

2. Exhaust gas aftertreatment device (10) according to claim 1, wherein the switching configurations further comprise a third switching configuration in which at least a portion of the exhaust gas can be passed past the exhaust gas condenser (14).

3. Exhaust gas aftertreatment device (10) according to claim 1 or 2, wherein the switching device (32, 34, 36, 38, 40) comprises a first line (32) via which the output of the exhaust gas condenser (14) and the input of the exhaust gas dehumidifier (12A) are fluidically connectable, and a second line (34) via which the output of the exhaust gas dehumidifier (12A) and the input of the exhaust gas condenser (14) are fluidically connectable.

4. Exhaust gas aftertreatment device (10) according to one of the preceding claims, wherein the switching device (32, 34, 36, 38, 40) comprises a plurality, preferably at least three, of valve devices (36, 38, 40).

5. Exhaust gas aftertreatment device (10) according to claims 3 and 4, wherein the plurality of valve devices (36, 38, 40) are controllable such that the exhaust gas
a) in the first switching configuration first flows through the exhaust gas condenser (14), is routed via the first line (32) to the exhaust gas dehumidifier (12A), and then flows through the exhaust gas dehumidifier (12A), and
a) in the second switching configuration, first is flowing through the exhaust gas dehumidifier (12A), is routed via the second line (34) to the exhaust gas condenser (14), and then is flowing through the exhaust gas condenser (14).

6. Exhaust gas aftertreatment device (10) according to claim 4 or 5, wherein the plurality of valve devices (36, 38, 40) are each designed as a controllable directional control valve and/or a controllable changeover valve.

7. Exhaust gas aftertreatment device (10) according to one of the preceding claims, wherein the switching device (32, 34, 36, 38, 40) comprises a first valve device (36) which is arranged between the inlet (20) and the exhaust gas dehumidifier (12A) and between the inlet (20) and the exhaust gas condenser (14).

8. An exhaust gas aftertreatment device (10) according to one of the preceding claims, wherein the switching device (32, 34, 36, 38, 40) comprises a first valve device (36) which is configured to
a) in the first switching configuration, to disconnect a fluid connection between the inlet (20) and the exhaust gas dehumidifier (12A) and to establish a fluid connection between the inlet (20) and the exhaust gas condenser (14), and/or
b) in the second switching configuration, to establish the fluid connection between the inlet (20) and the exhaust gas dehumidifier (12A) and to disconnect the fluid connection between the inlet (20) and the exhaust gas condenser (14).

9. Exhaust gas aftertreatment device (10) according to claims 2 and 8, wherein the first valve device (36) is further configured, in the third switching configuration, to establish the fluid connection between the inlet (20) and the exhaust gas dehumidifier (12A), and to establish the fluid connection between the inlet (20) and the exhaust gas condenser (14).

10. Exhaust gas aftertreatment device (10) according to one of the preceding claims, wherein the switching device (32, 34, 36, 38, 40) comprises a second valve device (38) , which is arranged between the exhaust gas condenser (14) and the outlet (30), and preferably between the exhaust gas condenser (14) and a first line (32) of the switching device (32, 34, 36, 38, 40).

11. Exhaust gas aftertreatment device (10) according to one of the preceding claims, wherein the switching device (32, 34, 36, 38, 40) comprises a second valve device (38) which is configured
a) in the first switching configuration, and preferably in the third switching configuration, to disconnect a fluid connection between the exhaust gas condenser (14) and the outlet (30) and to establish a fluid connection between the exhaust gas condenser (14) and the exhaust gas dehumidifier (12A), and/or
b) in the second switching configuration, to establish the fluid connection between the exhaust gas condenser (14) and the outlet (30) and to disconnect the fluid connection between the exhaust gas condenser (14) and the exhaust gas dehumidifier (12A).

12. Exhaust gas aftertreatment device (10) according to one of the preceding claims, wherein the switching device (32, 34, 36, 38, 40) comprises a third valve device (40) arranged between the exhaust gas dehumidifier (12A) and the outlet (30), and preferably between the exhaust gas dehumidifier (12A) and a second line (34) of the switching device (32, 34, 36, 38, 40).

13. Exhaust gas aftertreatment device (10) according to one of the preceding claims, wherein the switching device (32, 34, 36, 38, 40) comprises a third valve device (40) which is configured,
a) in the first switching configuration, and preferably in a third switching configuration, to disconnect a fluid connection between the exhaust gas dehumidifier (12A) and the exhaust gas condenser (14) and to establish a fluid connection between the exhaust gas dehumidifier (12A) and the outlet (30), and/or
b) in the second switching configuration, to establish the fluid connection between the exhaust gas dehumidifier (12A) and the exhaust gas condenser (14) and to disconnect the fluid connection between the exhaust gas dehumidifier (12A) and the outlet (30).

14. Exhaust gas aftertreatment device (10) according to one of the preceding claims, wherein the exhaust gas aftertreatment device (10) further comprises a control device configured to control the switching device (32, 34, 36, 38, 40) to switch between at least two switching configurations of the exhaust gas dehumidifier (12A) and the exhaust gas condenser (14) in dependence on at least one of the following conditions:
- at least one operating condition and/or one operating point of the fuel cell arrangement (50);
- at least one ambient condition of the fuel cell arrangement (50) and/or the Exhaust gas aftertreatment device (10);
- a total pressure of the exhaust gas upon entry of the exhaust gas into the exhaust gas aftertreatment device (10); and/or
- a proportion, preferably a molar fraction, a mass flow and/or a current density, of water vapour in the exhaust gas upon entry of the exhaust gas into the exhaust gas aftertreatment device (10).

15. Exhaust gas aftertreatment device (10) according to one of the preceding claims, wherein the exhaust gas condenser (14) comprises at least one water condensation device (14A) and a water separator (14B), which is preferably arranged downstream of the water condensation device (14A) in the flow path.

16. Drive device (100) for a motor vehicle, preferably a commercial vehicle, comprising:
a fuel cell arrangement (50); and
an exhaust gas aftertreatment device (10) according to one of the preceding claims.

17. A drive device (100) according to claim 16, further comprising:
an intake tract (60), preferably the air supply side of a cathode path for the fuel cell arrangement (50), for supplying air, preferably oxygen, to the fuel cell arrangement (50); and
an exhaust gas tract (70), preferably an exhaust gas side of the cathode path, for discharging exhaust gas, preferably air enriched with water vapour and/or water, from the fuel cell arrangement (50), wherein the exhaust gas aftertreatment device (10) is designed as part of the exhaust gas tract (70).

18. A drive device (100) according to claim 17, wherein the exhaust gas dehumidifier (12A) is designed as part of a humidifier device (12) for transferring the water vapour and/or water extracted from the exhaust gas from the exhaust gas tract to the intake tract.

19. Drive device (100) according to claim 18, wherein the switching device (32, 34, 36, 38, 40) is configured to switch between the switching configurations in response to a partial pressure difference of the water vapour and/or water transferred by means of the humidifier means (12).

20. Motor vehicle, preferably a commercial vehicle, comprising a drive device (100) according to any one of claims 15 to 19 and/or an exhaust gas aftertreatment device (10) according to any one of claims 1 to 14.

## Revendications

1. Système de post-traitement des gaz d'échappement (10) pour un arrangement de piles à combustible (50), comprenant :
une entrée (20), qui peut être reliée de manière fluidique à l'arrangement de piles à combustible (50) en vue de recevoir un gaz d'échappement évacué de l'arrangement de piles à combustible (50), en particulier de l'air enrichi en vapeur d'eau et/ou en eau ;
une sortie (30) destinée à évacuer les gaz d'échappement après leur passage dans le système de post-traitement des gaz d'échappement (10) ;
un déshumidificateur de gaz d'échappement (12A) destiné à extraire l'eau et/ou la vapeur d'eau des gaz d'échappement ;
un condenseur de gaz d'échappement (14) destiné à liquéfier et/ou à séparer l'eau des gaz d'échappement, le déshumidificateur de gaz d'échappement (12A) et le condenseur de gaz d'échappement (14) étant montés en série de manière fluidique ; et
un dispositif de permutation fluidique (32, 34, 36, 38, 40) destiné à permuter entre au moins deux configurations de commutation du déshumidificateur de gaz d'échappement (12A) et du condenseur de gaz d'échappement (14), les configurations de commutation comprenant :
a) une première configuration de commutation dans laquelle le condenseur de gaz d'échappement (14) est raccordé de manière fluidique en amont du déshumidificateur de gaz d'échappement (12A), et
b) une deuxième configuration de commutation dans laquelle le condenseur de gaz d'échappement (14) est raccordé de manière fluidique en aval du déshumidificateur de gaz d'échappement (12A).

2. Système de post-traitement de gaz d'échappement (10) selon la revendication 1, les configurations de commutation comprenant en outre une troisième configuration de commutation dans laquelle au moins une partie des gaz d'échappement peut être acheminée au niveau du condenseur de gaz d'échappement (14).

3. Système de post-traitement des gaz d'échappement (10) selon la revendication 1 ou 2, le dispositif de permutation (32, 34, 36, 38, 40) comprenant une première conduite (32), par le biais de laquelle une sortie du condenseur de gaz d'échappement (14) et une entrée du déshumidificateur de gaz d'échappement (12A) peuvent être reliées de manière fluidique, et une deuxième conduite (34), par le biais de laquelle une sortie du déshumidificateur de gaz d'échappement (12A) et une entrée du liquéfacteur de gaz d'échappement (14) peuvent être reliées de manière fluidique.

4. Système de post-traitement des gaz d'échappement (10) selon l'une des revendications précédentes, le dispositif de permutation (32, 34, 36, 38, 40) comprenant plusieurs, de préférence au moins trois, dispositifs à vanne (36, 38, 40).

5. Système de post-traitement de gaz d'échappement (10) selon les revendications 3 et 4, les plusieurs dispositifs à vanne (36, 38, 40) pouvant être commandés de telle sorte que les gaz d'échappement
a) dans la première configuration de commutation, s'écoulent d'abord à travers le condenseur de gaz d'échappement (14), sont conduit par l'intermédiaire de la première conduite (32) vers le déshumidificateur de gaz d'échappement (12A), puis s'écoulent ensuite à travers le déshumidificateur de gaz d'échappement (12A), et
a) dans la deuxième configuration de commutation, s'écoulent d'abord à travers le déshumidificateur de gaz d'échappement (12A), sont conduit par l'intermédiaire de la deuxième conduite (34) vers le condenseur de gaz d'échappement (14), puis s'écoulent ensuite à travers le condenseur de gaz d'échappement (14).

6. Système de post-traitement des gaz d'échappement (10) selon la revendication 4 ou 5, les plusieurs dispositifs à vanne (36, 38, 40) étant respectivement réalisés sous la forme d'un distributeur commandable et/ou d'une vanne de commutation commandable.

7. Système de post-traitement des gaz d'échappement (10) selon l'une des revendications précédentes, le dispositif de permutation (32, 34, 36, 38, 40) comprenant un premier dispositif à vanne (36) qui est disposé entre l'entrée (20) et le déshumidificateur de gaz d'échappement (12A) et entre l'entrée (20) et le condenseur de gaz d'échappement (14).

8. Système de post-traitement des gaz d'échappement (10) selon l'une des revendications précédentes, le dispositif de permutation (32, 34, 36, 38, 40) comprenant un premier dispositif à vanne (36) qui est configuré
a) dans la première configuration de commutation, pour déconnecter une connexion fluidique entre l'entrée (20) et le déshumidificateur de gaz d'échappement (12A) et pour établir une connexion fluidique entre l'entrée (20) et le condenseur de gaz d'échappement (14), et/ou
b) dans la deuxième configuration de commutation, établir la connexion fluidique entre l'entrée (20) et le déshumidificateur de gaz d'échappement (12A) et déconnecter la connexion fluidique entre l'entrée (20) et le condenseur de gaz d'échappement (14).

9. Système de post-traitement des gaz d'échappement (10) selon les revendications 2 et 8, le premier dispositif à vanne (36) étant en outre configuré pour, dans la troisième configuration de commutation, établir la connexion fluidique entre l'entrée (20) et le déshumidificateur de gaz d'échappement (12A) et pour établir la connexion fluidique entre l'entrée (20) et le condenseur de gaz d'échappement (14).

10. Système de post-traitement des gaz d'échappement (10) selon l'une des revendications précédentes, le dispositif de permutation (32, 34, 36, 38, 40) comprenant un deuxième dispositif à vanne (38) qui est disposé entre le condenseur de gaz d'échappement (14) et la sortie (30), et de préférence entre le condenseur de gaz d'échappement (14) et une première conduite (32) du dispositif de permutation (32, 34, 36, 38, 40).

11. Système de post-traitement des gaz d'échappement (10) selon l'une des revendications précédentes, le dispositif de permutation (32, 34, 36, 38, 40) comprenant un deuxième dispositif à vanne (38) qui est configuré
a) dans la première configuration de commutation, et de préférence dans la troisième configuration de commutation, pour déconnecter une connexion fluidique entre le condenseur de gaz d'échappement (14) et la sortie (30) et pour établir une connexion fluidique entre le condenseur de gaz d'échappement (14) et le déshumidificateur de gaz d'échappement (12A), et/ou
b) dans la deuxième configuration de commutation, établir la connexion fluidique entre le condenseur de gaz d'échappement (14) et la sortie (30) et déconnecter la connexion fluidique entre le condenseur de gaz d'échappement (14) et le déshumidificateur de gaz d'échappement (12A).

12. Système de post-traitement des gaz d'échappement (10) selon l'une des revendications précédentes, le dispositif de permutation (32, 34, 36, 38, 40) comprenant un troisième dispositif à vanne (40) qui est disposé entre le déshumidificateur de gaz d'échappement (12A) et la sortie (30), et de préférence entre le déshumidificateur de gaz d'échappement (12A) et une deuxième conduite (34) du dispositif de permutation (32, 34, 36, 38, 40).

13. Système de post-traitement des gaz d'échappement (10) selon l'une des revendications précédentes, le dispositif de permutation (32, 34, 36, 38, 40) comprenant un troisième dispositif à vanne (40) qui est configuré
a) dans la première configuration de commutation, et de préférence dans une troisième configuration de commutation, pour déconnecter une connexion fluidique entre le déshumidificateur de gaz d'échappement (12A) et le condenseur de gaz d'échappement (14) et pour établir une connexion fluidique entre le déshumidificateur de gaz d'échappement (12A) et la sortie (30), et/ou
b) dans la deuxième configuration de commutation, établir la connexion fluidique entre le déshumidificateur de gaz d'échappement (12A) et le condenseur de gaz d'échappement (14) et déconnecter la connexion fluidique entre le déshumidificateur de gaz d'échappement (12A) et la sortie (30).

14. Système de post-traitement des gaz d'échappement (10) selon l'une des revendications précédentes, le dispositif de post-traitement des gaz d'échappement (10) comprenant en outre un dispositif de commande qui est configuré pour commander le dispositif de permutation (32, 34, 36, 38, 40) en vue de permuter entre au moins deux configurations de commutation du déshumidificateur de gaz d'échappement (12A) et du condenseur de gaz d'échappement (14) en fonction d'au moins l'une des conditions suivantes :
- au moins une condition de fonctionnement et/ou un point de fonctionnement de l'arrangement de piles à combustible (50) ;
- au moins une condition ambiante de l'arrangement de piles à combustible (50) et/ou du système de post-traitement des gaz d'échappement (10) ;
- une pression totale des gaz d'échappement lors de l'entrée des gaz d'échappement dans le système de post-traitement des gaz d'échappement (10) ; et/ou
- une proportion, de préférence une proportion molaire, un débit massique et/ou une densité de courant, de vapeur d'eau dans les gaz d'échappement lors de l'entrée des gaz d'échappement dans le système de post-traitement des gaz d'échappement (10).

15. Système de post-traitement des gaz d'échappement (10) selon l'une des revendications précédentes, le condenseur de gaz d'échappement (14) possédant au moins un dispositif de condensation d'eau (14A) et un séparateur d'eau (14B), qui est monté de préférence de manière fluidique en aval du dispositif de condensation d'eau (14A).

16. Système d'entraînement (100) pour un véhicule automobile, en particulier un véhicule utilitaire, comprenant :
un arrangement de piles à combustible (50) ; et
un système de post-traitement des gaz d'échappement (10) selon l'une des revendications précédentes.

17. Dispositif d'entraînement (100) selon la revendication 16, comprenant en outre :
un conduit d'admission (60), de préférence un côté d'arrivée d'air d'un trajet cathodique pour l'arrangement de piles à combustible (50), destiné à fournir de l'air, en particulier de l'oxygène, pour l'arrangement de piles à combustible (50) ; et
un conduit d'échappement (70), de préférence un côté gaz d'échappement du trajet cathodique, destiné à évacuer les gaz d'échappement, en particulier l'air enrichi en vapeur d'eau et/ou en eau, de l'arrangement de piles à combustible (50), le dispositif de post-traitement des gaz d'échappement (10) étant réalisé en tant que partie du conduit d'échappement (70).

18. Système d'entraînement (100) selon la revendication 17, le déshumidificateur de gaz d'échappement (12A) étant réalisé en tant que partie d'un dispositif humidificateur (12) destiné à transférer la vapeur d'eau extraite des gaz d'échappement et/ou l'eau extraite des gaz d'échappement du conduit d'échappement dans le conduit d'admission.

19. Système d'entraînement (100) selon la revendication 18, le dispositif de permutation (32, 34, 36, 38, 40) étant configuré pour permuter entre les configurations de commutation en fonction d'une différence de pression partielle de la vapeur d'eau et/ou de l'eau transmise au moyen du dispositif humidificateur (12).

20. Véhicule automobile, de préférence véhicule utilitaire, comprenant un système d'entraînement (100) selon l'une des revendications 15 à 19 et/ou un système de post-traitement des gaz d'échappement (10) selon l'une des revendications 1 à 14.
